# EUROPEAN PATENT SPECIFICATION

(11) **EP 3 130 529 B1**
(45) Date of publication and mention of the grant of the patent: **20.02.2019**
(21) Application number: 16183562.4
(22) Date of filing: 10.08.2016
(51) Int. Cl.: B62D 33/02

(54) **AN ARRANGEMENT FOR RIGIDLY CONNECTING A LOWER END OF A VERTICAL STAKE TO A HORIZONTAL CROSS-BEAM**
ANORDNUNG ZUM STARREN VERBINDEN EINES UNTEREN TEILS EINES VERTIKALEN PFOSTENS MIT EINEM HORIZONTALEN QUERTRÄGER
AGENCEMENT DE SOLIDARISATION D'UNE EXTRÉMITÉ INFÉRIEURE D'UN PIQUET VERTICAL À UNE TRAVERSE HORIZONTALE

(30) Priority: 10.08.2015 SE 1551061
(43) Date of publication of application: 15.02.2017
(73) Proprietor: Timbtech AB, 696 33 Askersund (SE)
(72) Inventor: Franzén, Håkan, 694 91 HALLSBERG (SE)
(74) Representative: Johansson, Lars E.

(56) References cited:
- EP-A2- 2 724 919
- DE-A1- 2 816 579
- SE-B- 462 588
- US-A1- 2010 072 770

## Description

### TECHNICAL FIELD

The present invention relates to an arrangement for rigidly connecting a lower end of a vertical stake to a horizontal cross-beam adapted to be attached to a longitudinal beam in a carrying structure of a vehicle.

Such arrangements are widely used for the transportation of lumber such as wood logs on trucks, trailers, railway wagons, and other vehicles.

It is evident for the skilled person that the definitions horizontal and vertical shall be construed in a broad manner to assist in defining the basic relationship between the cross bar and the stake, i.e. details that normally are extending substantially horizontal substantially vertical, respectively, without any limiting effect. For instance, the stake that is extending substantially vertical will normally need to provide some flexibility to counteract/resist the pressure from the load in a good manner (e.g. of timber) and accordingly in an unloaded state it may be preferred to have the stakes inclined slightly inwardly.

### BACKGROUND ART

In the present context the term "stake" is intended to include all types of vertical supports or posts, and the term "cross-beam" is intended to include any bunk or other beam extending crosswise over a chassis or the like of a vehicle (*vide* US 6,299,395 B1, for example) for forming part of a bottom of a space for carrying the lumber load, while the stakes limit the longitudinal sides of the space. For reasons of transport economy, the space should be as large as permitted by various regulations and laws. As a rule, the height of the space is fixed, but the width between the stakes should be as large as possible in order to permit a larger load.

In many cases it is desirable that the loading platform formed has a stake anchoring arrangement that is flexible in such a way that the driver also when out on the roads is able to adapt the appearance/configuration of the loading platform to various loads in an easy way without the need of workshop tools.

Theoretically, a loading platform having a large number of round sockets into which round stakes easily can be lowered or removed may be a solution as disclosed in WO 2005/100137 A1, for example. However, as both stated in laws and demanded by the drivers, the stakes have to be securely/locked to the structure carrying the load, so that the stakes cannot jump out of the sockets during transportation, or rattle or shake when without load.

Prior art flexible, disengageable anchoring of stakes in stake anchoring arrangements can be divided into two main groups, a first group using a locking mechanism arranged in the stake and a second group using a locking mechanism arranged in or at the socket.

Examples of disengageable anchoring in stake anchoring arrangements belonging to the first group are disclosed in EP 0 244 383 A2 and SE 451 987, for example, wherein the locking mechanism is arranged in the stake, and after the stake has been lowered into the socket, the driver activates the locking mechanism by turning a control by means of a large special wrench. The locking mechanism then engages the socket and prevents the stake from jumping out of the socket. A disadvantage is that each separate stake must comprise a locking mechanism making each stake expensive and complicated to manufacture, and at the same time each stake becomes unnecessarily heavy and cumbersome for the driver to handle. Moreover, such solutions are also suffering from the problem that the stakes rattle and shake in the sockets, especially when not exposed to a load, i.e. when the truck is driven unloaded, which is irritating for the driver and detrimental for the stake as well as for the socket.

Examples of disengageable anchoring of stake anchoring arrangements of the second group are disclosed in SE 451 009 and WO 93/24344, in which the stakes at their lower ends comprise threaded holes. A bolt is provided in a through hole in the bottom of the socket and screwed into the threaded hole of the stake from below, the bolt pulling the stake downwards toward the bottom of the socket. In this way the stake is prevented from jumping out of the socket. However, also these solutions suffer from the problem that the stakes when not exposed to load rattle and shake in the sockets, which also may result in the bolt coming loose. Moreover, it is cumbersome to access the bolts at the underside of the loading platform. In applications where the stakes are to be placed in the middle of the loading platform, it can even be impossible to access the underside of the socket. Examples of attempts to solve the problem of rattle and shaking are described in SE 405 235 and SE 463 759, where different types of wedge assemblies for pressing the stakes against the walls of the sockets are used. The shown wedge assemblies use two interacting wedge members, which are axially displaced in relation to each other by means of a bolt and nut arrangement. Even though these solutions tolerably solve the problem of rattle and shaking, the above mentioned difficulties of reaching the bolts and nuts of the locking mechanism remain.

WO 2011/159239 A1 discloses another stake anchoring arrangements of the second group. Here the wedge is spring-loaded and supplemented by a catch that is operated by the insertion of the stake into the socket to release the spring-loaded wedge so that it can move to a stake locking position.

As suggested in EP 2 724 919 A2, the problem of rattling and shaking may be solved by welding a socket to the stake. The socket has two parallel wings, which in the direction of the vehicle are attached by screws to a front side and a rear side of the cross-beam. This means that in a loaded vehicle, the stake will expose the screws to shearing forces. A screw is an engineering element that is designed to take up tension, not shearing forces.

Document SE 462 588 B discloses an arrangement according to the preamble of independent claim 1.

In all of these stake anchoring arrangements a socket is used, and the use of a socket at each end of the cross-beam reduces the utilizable distance, *i.e.* the inner width, between the stakes mounted at the two ends of the cross-beam.

### SUMMARY OF THE INVENTION

The main object of the present invention is to provide an arrangement for rigidly connecting a lower end of a vertical stake to a horizontal cross-beam adapted to be attached to a longitudinal beam in a carrying structure of a vehicle, which arrangement is such that it without sacrificing the advantages of prior art arrangements permits an increase in the utilizable distance, *i.e.* the inner width, between the stakes mounted at the two ends of the cross-beam.

In accordance with the present invention this object is achieved by an arrangement for connecting a lower end of a vertical stake to a horizontal cross-beam adapted to be attached to a beam in a carrying structure of a vehicle, said arrangement comprising:
- said vertical stake having a lower end;
- said cross-beam having an end surface;
- a plurality of bores provided with threads in said end surface, said threaded bores extending in a longitudinal direction of the cross-beam, preferably in parallel to one another,
- a plurality of screws engaging the threads of the threaded bores in the cross-beam to connect the lower end of the stake to the end surface of the cross-beam, wherein
- a plurality of openings are provided through said lower end of the stake, said plurality of openings extending crosswise in relation to a longitudinal axis of the stake and being aligned with the threaded bores,
- and said plurality of screws extend through openings of the stake.

By refraining from using sockets, the utilizable distance, *i.e.* the inner width, between the stakes can be increased, and by using screws extending through the stake into the end surface of the cross-beam, they are easily accessible and the force from a lumber load on the stake will expose the screws only to tension, not to shearing. To take up the tension, the screws can be as long as required in order not to be permanently deformed by the tensile force from the load. Thanks to the invention many advantages may be gained, e.g. thinner stakes (e.g. thinner than 100 mm, more preferred thinner than 80 mm) that provide extra loading space and/or a lower weight, etc.

In the most preferred embodiment, the stake has a basically rectangular section and has one side facing the end of the cross-beam and an opposite side facing away from said beam end, each screw has a head and a shank, and each opening includes a sleeve through which an associated one of the screws extends. Further, each sleeve has one end receiving tightening load from the head of the screw and an opposite end pressed by said tightening load against an inside of the stake side facing the end of the cross-beam. By the provision of the sleeves, the screw heads will be readily accessible at an outside of the stake, and the depth of the bores for the screw shanks in the cross-beam can be readily adapted to permit the use of screws of desired/required length.

It is preferred that the screw is a countersunk screw having a tapered inner face, which may be spherical, and that said opposite end of the sleeve has a shape cooperating with the rounded inner face of the screw flange. If desired, as an alternative, a washer having one side shaped to cooperate with the tapered inner face of the screw may be interposed between said opposite end of the sleeve and the screw. Thereby, the transmission of pressure from the screw to the sleeve can be optimized to handle forces caused by outward acting forces from the lumber load on the stake.

In order to avoid that an outward acting force from the lumber load on the stake causes a sharp bend just above two upper sleeves that form a top pair, a lower end of the stake side facing the end of the cross-beam preferably is reinforced.

It is also preferred that two of the sleeves form a bottom pair, and that each sleeve in that pair has a downward directed longitudinal slot of a width such that the screw shank may pass through the slot. Thereby, a substitution of stakes is facilitated in that after loosening the two pairs of screws and removing the top pair, the stake to be substituted can be lifted up and removed, where after the new stake can be lowered into the correct position (stopped by the lower pair of loosened screws), the upper pair of screws is mounted, and both pairs are tightened.

Preferably, an end piece having bores aligned with the threaded bores is attached between the stake and the end of the cross-beam. Thereby, the main portion of the cross-beam can be of a predetermined length and be supplemented by end pieces of different lengths to fulfill the requirements of maximum vehicle widths in various countries or states. Moreover it facilitates the use of sufficiently long screws to provide for optimized pre-tensioning, assisting in providing good strength.

The end piece suitably may be equipped with attachment means, e.g. horizontal through bores extending crosswise, for attachment of a device for securing the load.

It is also preferred that the cross-beam is solid and basically I-shaped and has sufficiently sturdy flanges to permit location of one threaded bore in each flange, and also to provide storage space for a device for securing the load.

### BRIEF DESCRIPTION OF THE DRAWINGS

In the following, the invention will be described in more detail with reference to preferred embodiments and the appended drawings.
- Fig. 1: is a perspective view of an arrangement in accordance with the invention for rigidly connecting a lower end of a vertical stake to a horizontal cross-beam adapted to be attached to a longitudinal beam in a carrying structure of a vehicle.
- Fig. 2: is a view of the outer side of the lower portion of the stack shown in Fig. 1.
- Fig. 3: is a cross-sectional view taken along line III-III in Fig. 1.
- Fig. 4: is an enlarged view of the right hand portion of Fig. 3.

### DETAILED DESCRIPTION

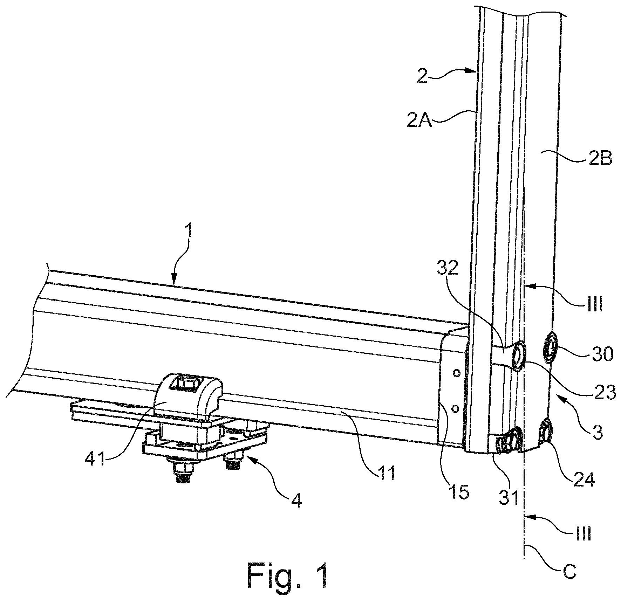

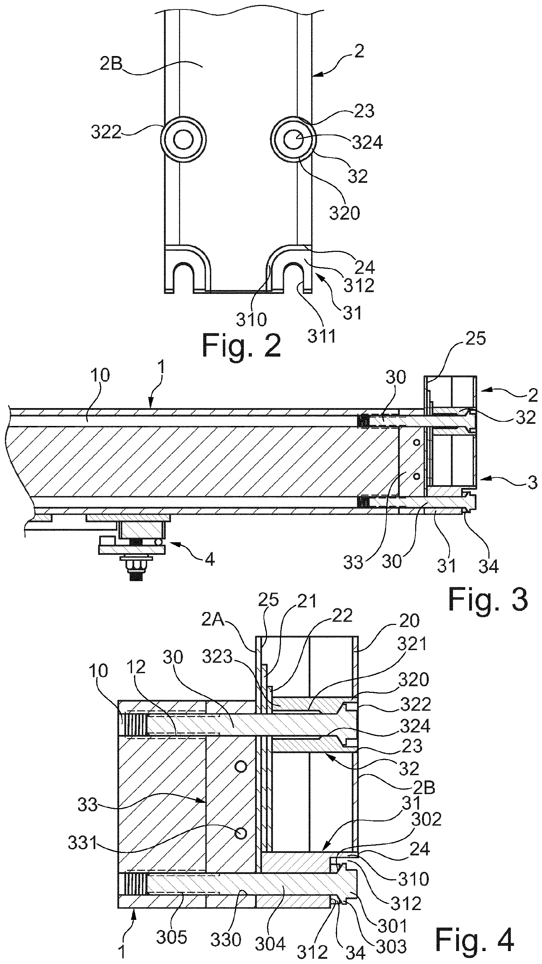

In figures 1-4 there is presented a preferred embodiment of an arrangement in accordance with the invention. The arrangement comprises a horizontal cross beam 1 and a vertical stake 2 attached to the end of the cross beam 1, by means of an attachment arrangement 3.

As shown in figure 1 the cross beam 1 preferably has an I-beam shape providing flanges 11 that are used for attaching the cross beam 1 to a vehicle. Further it is shown a fixation arrangement 4 (known per se) including a fixation clamp 41 that clamps against the flange 11 of the cross beam 1 to securely fixate the cross beam 1 to a vehicle (not shown).

The attachment arrangement 3 includes a plurality of screws 30 and sleeves 31, 32, preferably four each, to securely attach the stake 2 at an end surface 15, indirectly or directly, of the cross beam 1. The cross beam 1 is arranged with bores 10 provided with threads 12. As in the shown example the bores 10 may be deeper than the portion 12 arrange with threads. There are four threaded bores 10 provided in each cross beam 11, which bores 10 extend in parallel to one and other in the longitudinal direction of the cross beam 1. A plurality of corresponding openings 23, 24 are provided at the lower end of the stake 2, which extend transversally in relation to the longitudinal axis C of the stake 2. These openings 23, 24 are aligned with the threaded bores 10, in the cross beam 1. A plurality, preferably four, of screws 30 are arranged through the openings 23, 24 of the stake 2 and engage the threads 12 in the cross beam 1 to securely connect the lower end of the stake 2 against the end surface 15 of the cross beam 1. According to a preferred embodiment there is a distance piece 33 arranged between the stake 2 and the end surface 15 of the cross beam 1. Thanks to the distance piece 33 extra volume is provided within the loading space enclosed by the stakes 2. The distance piece 33 is arrange with passages 330 aligned with the threaded bores 10 of cross beam 1 for passage of the screws 30 through the distance piece 33. Moreover, the end piece facilitates easy use of long screws having a screw shank 304, 305 with an inner threaded outer portion 305 for inter-fit with the threads 12 in the bore 10 and an intermediate portion 304 of substantial length, preferably at least 30%, more preferred at least 50% of the whole length of the shank, to facilitate beneficial pre-tensioning of the screws. Preferably the intermediate portion 304 is unthreaded, and more preferred with a smaller diameter than the threaded portion 305, to thereby provide for even better pre-tensioning of the screws.

The distance piece 33 preferably matches the outer boundaries of the cross sectional dimension of the cross beam 1, e.g. preferably having the same height of the end piece 33 as the cross sectional height of the cross beam 1.

In the shown embodiment the stake 2 is made of metal, having a jacket 20 made from high quality steel. However it is foreseen to use two jacket of sheet metal, e.g. an outer jacket made in aluminum and an inner jacket made in steel. The jackets may be produced from flat metal sheets or extruded, presenting a substantially rectangular cross sectional form. However, it is foreseen that different kind of materials may be used to provide different properties of the stake 2, wherein the same kind of attachment arrangement 3 is being used. For instance, composite materials may be used to provide properties that are beneficial, e.g. using a structure wherein the stake 2 has a metal jacket 20 and the inside filled with polymeric material, e.g. fiber reinforce polymeric material, either applied as an integral body or applied in the form of different layers within the stake 2.

The lower end of the stake 2 has one side 2A facing the end 15 of the cross beam 1 and opposite side 2B facing away from said end 15. The screws 30 are applied through stake 2 from the side 2B that is facing away from the end 15 of the cross beam, which provides for easy access when handling the screws 30.

The screws 30 are preferably of the kind having a head 301 and a flange 303, wherein the flange is arranged with a tapered/cone shaped inner face 302. Furthermore preferably a mid-portion of the screw shank 304 is not provided with threads, such that the threaded part 305 of the screw 30 merely extends a limited portion along the other end of the screw 30.

Each sleeve 31, 32 is adapted to have its outer end surface substantially flush with the outer surface of the outer side 2B of the stake. The other end of the sleeve 31, 32 is arranged to apply pressure on to an inner side 25 of the stake side 2A facing the end 15 of the cross beam 1. Each sleeve 31, 32 is arranged with a passage 311, 324 providing a through hole for the screw 30. Furthermore each sleeve 31, 32 is arranged with an outer flange portion 310, 320 that includes the outer end surface of the sleeves, being flush with the outer surface 2B of the stake 2. The flange 310, 320 has a dimension to allow the screw head 301 and screw flange 303 to fit into it, i.e. to house the screw head/flange within the space enclosed by flange 310, 320. Hereby the screw head becomes positioned inside outer surface 2B of the stake 2, or at least substantially in level therewith.

The upper sleeves 32 have rotationally symmetrical shape, i.e. presenting a central passage there through. At the lower end of the flange 320 there is a tapered surface 325 intended to match the tapered/cone shaped surfaces 302 of the flange 303 of the screw 30. At other end of the sleeve 32 the through passage is arranged with a slightly larger diameter 321, than the hole 324 of an intermediate portion comprising the tapered surface 325 at one side. Accordingly in between the countersink hole 322 and the inner passage portion 321 there is an annual portion having an inner surface 324 that more or less snugly fits on to the unthreaded part of the shank 304 of the screw.

The lower sleeve 31 may preferably be arranged with a slot 311, having an opening directed down wards, with sufficient width to enable the screw shank 303 to freely move in the slot 311. Hereby the lower most pair of screws 30, used for the stake 2, may remain threaded (loosened/not clamped) when a stake 2 is taken out (e.g. exchanged), which improves upon the handling of the stakes 2. Moreover it is shown that the counter sank hole of the lower sleeve 31 is deeper than that used for the upper sleeves 32, to provide space for a washer 34 having one tapered side cooperating with the tapered/cone shaped inner face of the screw/flange 303. Moreover it is shown that a lower part 315 of the inner end of the sleeve 31 directly abuts the distance piece 33 whereas an upper end 316 abuts the inner a surface 25 of the stake 2.

In the shown embodiment the major part of the stake 2 is made to have a relatively light weight, e.g. thin metal sheet, and is therefore further arranged with reinforcing devices, e.g. reinforcing plates 21, 22, to reinforce within the attachment area of the stake, e.g. the area that extend from above the lower most sleeve 31 up to and further than the upper side of the cross beam 1. The upper sleeve 32 is arranged to have its inner end 316 to apply pressure on to the reinforcing plates 21, 22, and consequently apply pressure onto the distance piece 33 and the end face 15 via said reinforcement plates 21, 22.

The distance piece 33 is preferably arranged with attachment members 331 for application of external devices, e.g. an anchoring device (not shown) to be used for in connection with securing the load, e.g. chain tightners.

The invention is not limited by the examples describe above but by maybe varied within the scope of the appended claims. For instance, it is evident for the skilled person that the sleeves may be in the form of integral parts of the stake 2 and that then some definitions in the claims, e.g. "flange" and "pressing against the inside of the stake" must be given a broad interpretation to also include this kind of solution. Further it is evident that instead of using a common screw head (hexagonal) as shown, also other screw head forms may be used, e.g. having torques or insex form, wherein there may be no need to have a flange. Moreover it is evident that many other variations may be done without exercising any inventive skill, e.g. to vary the number of screws being used to fit different needs, etc.

## Claims

1. An arrangement for connecting a lower end of a vertical stake (2) to a horizontal cross-beam (1) adapted to be attached to a beam in a carrying structure of a vehicle, said arrangement comprising:
- said vertical stake (2) having a lower end;
- said cross-beam (1) having an end surface (15);
- a plurality of bores (10) provided with threads (12) in said end surface (15), said threaded bores (10) extending in a longitudinal direction of the cross-beam (1), preferably in parallel to one another,
- a plurality of screws (30) engaging the threads (12) of the threaded bores (10) in the cross-beam (1) to connect the lower end of the stake to the end surface (15) of the cross-beam,
**characterized in that**,
- a plurality of openings (23, 24) are provided through said lower end of the stake (2), said plurality of openings extending crosswise in relation to a longitudinal axis (C) of the stake and being aligned with the threaded bores (10),
- and said plurality of screws (30) extend through openings (23, 24) of the stake (2).

2. An arrangement as claimed in claim 1, **characterized in that** said stake (2) comprises a metal jacket provided with said openings (23, 24) and that sleeves (31, 32) for the screws (30) are arranged in said openings (23, 24).

3. An arrangement as claimed in claim 2, wherein the stake (2) has a basically rectangular cross section and has one side (2A) facing the end of the cross-beam and an opposite side (2B) facing away from said end, each screw (30) has a head (301, 303) and a shank (304, 305), and each opening includes a sleeve (31, 32) through which an associated one of the screws (30) extends, each sleeve (31, 32) having one end receiving tightening load from the head (301, 303) of the screw (30) and an opposite end pressed by said tightening load, directly or indirectly, against an inside (25) of the stake side facing the end of the cross-beam (1).

4. An arrangement as claimed in claim 2 or 3, wherein the screw (30) is a countersunk screw.

5. An arrangement as claimed in claim 2, 3 or 4, wherein the head (301, 3030) of the screw (30) has a tapered/cone shaped inner face (302), preferably a flanged head screw (30) wherein the inner face (302) of the screw flange (303) is tapered/cone shaped.

6. An arrangement as claimed in claim 2, 3, 4 or 5, wherein said opposite end of the sleeve (31, 32) has a flange (310, 320) enclosing a counter sink hole (312, 322) arranged to house the screw head (301, 303).

7. An arrangement as claimed in claim 2, 3, 4 or 5, wherein a washer (312) having one side shaped to cooperate with the inner face (302) of the screw is interposed between said opposite end of the sleeve (31) and the screw head (301, 303).

8. An arrangement as claimed in any one of claims 1-7, wherein a lower end of the stake side facing the end of the cross-beam has a reinforced wall portion (21, 22), preferably in the form of reinforcing plates (21, 22) at the inner side wall of the stake (2).

9. An arrangement as claimed in any one of claims 2-8, wherein two of the sleeves (31) form a bottom pair, and each sleeve (31) in the bottom pair has a downward directed longitudinal slot (311) of a width such that the screw shank (304, 305) may pass through the slot.

10. An arrangement as claimed in any one of claims 1-8, wherein a distance piece (33) is arranged between the cross-beam (1) and the stake (2), having passages, preferably bores (330), aligned with the threaded bores (10) for passage of the screws through distance piece, wherein preferably the distance piece (33) has dimensions adapted to inter fit with the dimensions of the cross beam (1), preferably having the same height as the cross beam (1)

11. An arrangement as claimed in claim 10, wherein the distance piece (33) has attachment members (331) for an external device, preferably in the form of at least one horizontal through bore (331) extending crosswise through the distance piece (33).

12. An arrangement as claimed in any one of claims 1-11, wherein the stake (2) is made from composite materials.

13. An arrangement as claimed in claim 11, wherein the stake (2) is solid.

14. An arrangement as claimed in claim 1, wherein the stake (2) is made from or includes at least one metal jacket (20).

15. An arrangement as claimed in claim 14, wherein the stake (2) is made from or includes at least two metal jackets (20).

## Patentansprüche

1. Anordnung zum Verbinden eines unteren Endes eines vertikalen Pfostens (2) mit einem horizontalen Querträger (1), der ausgelegt ist, um an einem Träger in einer tragenden Struktur eines Fahrzeugs angebracht zu sein, wobei die Anordnung Folgendes umfasst:
- den vertikalen Pfosten (2), der ein unteres Ende hat,
- den Querträger (1), der eine Endfläche (15) hat,
- mehrere Bohrungen (10), die mit Gewinden (12) in der Endfläche (15) bereitgestellt sind, wobei sich die Gewindebohrungen (10) in eine Längsrichtung des Querträgers (1) erstrecken, vorzugsweise parallel zueinander,
- mehrere Schrauben (30), die mit den Gewinden (12) der Gewindebohrungen (10) in dem Querträger (1) in Eingriff kommen, um das untere Ende des Pfostens mit der Endfläche (15) des Querträgers zu verbinden,
**dadurch gekennzeichnet, dass**
- mehrere Öffnungen (23, 24) durch das untere Ende des Pfostens (2) bereitgestellt sind, wobei sich die mehreren Öffnungen kreuzweise in Beziehung zu einer Längsachse (C) des Pfostens erstrecken und mit den Gewindebohrungen (10) ausgerichtet sind,
- und sich die mehreren Schrauben (30) durch Öffnungen (23, 24) der Pfosten (2) erstrecken.

2. Anordnung nach Anspruch 1, **dadurch gekennzeichnet, dass** der Pfosten (2) einen Metallmantel umfasst, der mit den Öffnungen (23, 24) bereitgestellt ist, und dass Hülsen (31, 32) für die Schrauben (30) in den Öffnungen (23, 24) angeordnet sind.

3. Anordnung nach Anspruch 2, wobei der Pfosten (2) einen im Grunde rechteckigen Querschnitt hat und eine Seite (2A) hat, die dem Ende des Querträgers zugewandt ist, und eine gegenüberliegende Seite (2B), die von dem Ende abgewandt ist, wobei jede Schraube (30) einen Kopf (301, 303) und einen Schaft (304, 305) hat und jede Öffnung eine Hülse (31, 32) aufweist, durch die sich eine zugeordnete der Schrauben (30) erstreckt, wobei jede Hülse (31, 32) ein Ende hat, das eine Festziehlast von dem Kopf (301, 303) der Schraube (30) aufnimmt, und ein gegenüberliegendes Ende, das durch die Festziehlast direkt oder indirekt gegen eine Innenseite (25) der Pfostenseite, die dem Ende des Querträgers (1) zugewandt ist, gepresst wird.

4. Anordnung nach Anspruch 2 oder 3, wobei die Schraube (30) eine Senkschraube ist.

5. Anordnung nach Anspruch 2, 3 oder 4, wobei der Kopf (301, 3030) der Schraube (30) eine sich verjüngende/konusförmige Innenfläche (302) hat, vorzugsweise eine geflanschte Kopfschraube (30), wobei die Innenfläche (302) des Schraubenflansches (303) sich verjüngt/konusförmig ist.

6. Anordnung nach Anspruch 2, 3, 4 oder 5, wobei das gegenüberliegende Ende der Hülse (31, 32) einen Flansch (310, 320) hat, der ein Senkloch (312, 322) umgibt, das angeordnet ist, um den Schraubenkopf (301, 303) unterzubringen.

7. Anordnung nach Anspruch 2, 3, 4 oder 5, wobei eine Unterlegscheibe (312), die eine Seite hat, die geformt ist, um mit der Innenfläche (302) der Schraube zusammenzuwirken, zwischen dem gegenüberliegenden Ende der Hülse (31) und dem Schraubenkopf (301, 303) zwischengeordnet ist.

8. Anordnung nach einem der Ansprüche 1-7, wobei ein unteres Ende der Pfostenseite, die dem Ende des Querträgers zugewandt ist, einen verstärkten Wandabschnitt (21, 22) hat, vorzugsweise in Form von Verstärkungsplatten (21, 22) an der inneren Seitenwand des Pfostens (2).

9. Anordnung nach einem der Ansprüche 2-8, wobei zwei der Hülsen (31) ein Bodenpaar bilden und jede Hülse (31) in dem Bodenpaar einen nach unten gerichteten Längsschlitz (311) mit einer derartigen Breite hat, dass der Schraubenschaft (304, 305) durch den Schlitz durchgehen kann.

10. Anordnung nach einem der Ansprüche 1-8, wobei ein Abstandsstück (33) zwischen dem Querträger (1) und dem Pfosten (2) angeordnet ist, das Durchgänge hat, vorzugsweise Bohrungen (330), die mit den Gewindebohrungen (10) zum Durchgang der Schrauben durch Abstandsstück ausgerichtet sind, wobei vorzugsweise das Abstandsstück (33) Abmessungen hat, die ausgelegt sind, um mit den Abmessungen des Querträgers (1) zusammenzupassen, das vorzugsweise die gleiche Höhe wie der Querträger (1) hat.

11. Anordnung nach Anspruch 10, wobei das Abstandsstück (33) Anbringungselemente (331) für eine externe Vorrichtung hat, vorzugsweise in Form mindestens einer horizontalen Durchgangsbohrung (331), die sich kreuzweise durch das Abstandsstück (33) erstreckt.

12. Anordnung nach einem der Ansprüche 1-11, wobei der Pfosten (2) aus Verbundwerkstoffen hergestellt ist.

13. Anordnung nach Anspruch 11, wobei der Pfosten (2) massiv ist.

14. Anordnung nach Anspruch 1, wobei der Pfosten (2) aus mindestens einem Metallmantel (20) hergestellt ist oder diesen aufweist.

15. Anordnung nach Anspruch 14, wobei der Pfosten (2) aus mindestens zwei Metallmänteln (20) hergestellt ist oder diese aufweist.

## Revendications

1. Un agencement pour relier une extrémité inférieure d'un montant vertical (2) à une traverse horizontale (1) destinée à être fixée à une poutre dans une structure porteuse d'un véhicule, ledit agencement comprenant :
- ledit montant vertical (2), ayant une extrémité inférieure ;
- ladite traverse (1) ayant une surface d'extrémité (15) ;
- une pluralité d'alésages (10) présentant des filetages (12) dans ladite surface d'extrémité (15), lesdits alésages filetés (10) s'étendant dans une direction longitudinale de la traverse (1), de préférence parallèlement l'une à l'autre,
- une pluralité de vis (30) venant en prise avec les filetages (12) des alésages filetés (10) dans la traverse (1) pour relier l'extrémité inférieure du montant à la surface d'extrémité (15) de la traverse,
**caractérisé en ce que** :
- une pluralité d'ouvertures (23, 24) est prévue à travers ladite extrémité inférieure du montant (2), ladite pluralité d'ouvertures s'étendant transversalement par rapport à un axe longitudinal (C) du montant et les ouvertures étant alignées avec les alésages filetés (10),
- et ladite pluralité de vis (30) s'étend à travers ouvertures (23, 24) du montant (2).

2. Un agencement selon la revendication 1, **caractérisé en ce que** ledit montant (2) comprend une chemise métallique présentant lesdites ouvertures (23, 24) et **en ce que** des manchons (31, 32) pour les vis (30) sont disposés dans lesdites ouvertures (23, 24).

3. Un agencement selon la revendication 2, dans lequel le montant (2) a une section transversale essentiellement rectangulaire et a un côté (2A) faisant face à l'extrémité de la traverse et un côté opposé (2B) opposé à ladite extrémité, chaque vis (30) comporte une tête (301, 303) et une tige (304, 305), et chaque ouverture comprend un manchon (31, 32) à travers lequel s'étend une des vis (30) associées, chaque manchon (31, 32) ayant une extrémité recevant une charge de serrage de la tête (301, 303) de la vis (30) et une extrémité opposée pressée par ladite charge de serrage, directement ou indirectement, contre un intérieur (25) du côté du montant faisant face à l'extrémité de la traverse (1).

4. Agencement selon la revendication 2 ou la revendication 3, dans lequel la vis (30) est une vis à tête fraisée.

5. Un agencement selon la revendication 2, 3 ou 4, dans lequel la tête (301, 303) de la vis (30) a une face interne (302) effilée / en forme de cône, de préférence une vis (30) à tête à épaulement dans laquelle la face interne (302) de l'épaulement (303) de la vis est effilée / en forme de cône.

6. Un agencement selon la revendication 2, 3, 4 ou 5, dans lequel ladite extrémité opposée du manchon (31, 32) présente une bride (310, 320) entourant un trou fraisé (312, 322) agencé pour loger la tête de vis (301, 303).

7. Un agencement selon la revendication 2, 3, 4 ou 5, dans lequel une rondelle (312) ayant un côté conformé pour coopérer avec la face interne (302) de la vis est interposée entre ladite extrémité opposée du manchon (31) et la tête de vis (301, 303).

8. Un agencement selon l'une quelconque des revendications 1 à 7, dans lequel une extrémité inférieure du côté du montant faisant face à l'extrémité de la traverse comprend une partie de paroi renforcée (21, 22), de préférence sous la forme de plaques de renforcement (21, 22) au niveau de la paroi latérale intérieure du montant (2).

9. Un agencement selon l'une quelconque des revendications 2 à 8, dans lequel deux des manchons (31) forment une paire inférieure et chaque manchon (31) dans la paire inférieure présente une fente longitudinale (311) dirigée vers le bas ayant une largeur telle que la tige de vis (304, 305) est apte à passer à travers la fente.

10. Un agencement selon l'une quelconque des revendications 1 à 8, dans lequel une pièce d'écartement (33) est disposée entre la traverse (1) et le montant (2), présentant des passages, de préférence des alésages (330), alignés avec les alésages filetés (10) pour le passage des vis à travers une pièce d'écartement, la pièce d'écartement (33) ayant de préférence des dimensions adaptées pour correspondre aux dimensions de la traverse (1), de préférence ayant la même hauteur que la traverse (1).

11. Un agencement selon la revendication 10, dans lequel la pièce d'écartement (33) comporte des éléments de fixation (331) pour un dispositif externe, de préférence sous la forme d'au moins un alésage traversant horizontal (331) s'étendant transversalement à travers la pièce d'écartement (33).

12. Un agencement selon l'une quelconque des revendications 1 à 11, dans lequel le montant (2) est fabriqué à partir de matériaux composites.

13. Un agencement selon la revendication 11, dans lequel le montant (2) est massif.

14. Un agencement selon la revendication 1, dans lequel le montant (2) est constitué par, ou inclut, au moins une chemise métallique (20).

15. Un agencement selon la revendication 14, dans lequel le montant (2) est fabriqué à partir de, ou inclut, au moins deux chemises métalliques (20).
